Europäisches Patentamt

European Patent Office

Office européen des brevets

(19)

(11) Veröffentlichungsnummer: **0 240 023**
**B1**

(12) **EUROPÄISCHE PATENTSCHRIFT**

(45) Veröffentlichungstag der Patentschrift: **16.08.90**

(51) Int. Cl.⁵: **G 01 D 5/26**

(21) Anmeldenummer: **87104909.4**

(22) Anmeldetag: **02.04.87**

(54) **In einer Kunststoffkugel untergebrachte, opto-elektronische Anordnung.**

(30) Priorität: **04.04.86 DE 3611337**

(43) Veröffentlichungstag der Anmeldung:
**07.10.87 Patentblatt 87/41**

(45) Bekanntmachung des Hinweises auf die
Patenterteilung:
**16.08.90 Patentblatt 90/33**

(84) Benannte Vertragsstaaten:
**AT DE ES FR GB IT NL SE**

(56) Entgegenhaltungen:
**DE-A-2 015 982
US-A-3 628 394
US-A-3 921 445**

(73) Patentinhaber: **Deutsche Forschungsanstalt für
Luft- und Raumfahrt e.V.
Linder Höhe Postfach 90 60 58
D-5000 Köln 90 (DE)**

(72) Erfinder: **Dietrich, Johannes, Dipl.-Ing.
Am Buchenstock 30
D-8031 Gilching (DE)**
Erfinder: **Plank, Georg, Dipl.-Ing.
Seefelder Strasse 13
D-8036 Herrsching (DE)**
Erfinder: **Kraus, Hans
Münchener Strasse 9
D-8031 Alling/Biburg (DE)**

(74) Vertreter: **von Kirschbaum, Albrecht, Dipl.-Ing.
Hermann-Ehlers-Strasse 21a
D-8034 Germering (DE)**

**Beschreibung**

Die Erfindung betrifft eine in einer Kunststoffkugel untergebrachte, opto-elektronische Anordnung gemäß dem Oberbegriff des Anspruchs 1, mit welcher gleichzeitig sechs Komponenten eingegeben werden können, welche in einen kartesischen Koordinatensystem Verschiebungen in der X-, Y- und Z-Richtung sowie Winkeldrehungen Dx, Dy und Dz um diese drei Achsen sind.

Mit Hilfe einer solchen Anordnung läßt sich das Einlernen von Roboterbewegungen oder, allgemein ausgedrückt, das Bewegen von Manipulatoren sehr einfach, bequem und schnell bewerkstelligen. Auch bei 3 D-Graphik-Anwendungen lassen sich mit der in einer Kunststoffkugel untergebrachten Anordnung Darstellungen am Bildschirm sehr schnell verschieben, drehen und zoomen.

Hierzu wird vorzugsweise eine im Durchmesser der menschlichen Hand angepaßte Kunststoffkugel verwendet, wie sie aus der DE 32 40 251 bekannt ist. Als Meßsystem wurde ein aus der DE 27 27 704 bekannter Kraft-Drehmoment-Fühler verwendet. Ferner ist aus der US—A—3 921 445 ein Kraft- und Drehmoment-Meßverfahren und zugehörigem Manipulator bekannt. Hierbei werden die translatorischen und die rotativen Bewegungen um die drei orthogonalen Manipulator-Achsen unabhängig voneinander durch Paare passend angebrachter Lichtsensoren in diametral gegenüberliegenden Sensoreinheiten erfaßt. Darüber hinaus ist aus der US—A—3 628 394 ein Manipulator-Steuermechanismus bekannt, bei welchem ein Kugelgehäuse Verwendung findet.

Durch die Erfindung soll daher eine im Aufbau kompakte und im Vergleich zu den bekannten Kraft-Drehmoment-Fühlern einfach herzustellende, opto-elektronische Anordnung geschaffen werden, mit welcher statt Kräften und Momenten Wege und Winkelverschiebungen gemessen werden, und bei welcher die erhaltenen Meßwerte mittels einer einfachen Elektronik verstärkt und ausgewertet werden. Gemäß der Erfindung ist dies bei einer in einer Kunststoffkugel untergebrachten optoelektronischen Anordnung nach dem Oberbegriff des Patentanspruchs 1 durch die Merkmale im kennzeichnenden Teil des Anspruchs 1 erreicht. Vorteilhafte Weiterbildungen der Erfindung sind Gegenstand von abhängigen Patentansprüchen.

Gemäß einer bevorzugten Ausführungsform der in einer Kunststoffkugel untergebrachten, opto-elektronischen Anordnung sind mindestens sechs in gleichen Winkelabständen voneinander in einer Ebene angebrachte, lichtemittierende Einrichtungen vorgesehen, welchen jeweils in einem vorgegebenen Abstand entsprechend ausgerichtete Schlitzblenden fest zugeordnet sind. Ferner ist gegenüber jeder der lichtemittierenden Einrichtungen ein positionsempfindlicher Detektor so angeordnet, daß er mit seiner Detektorachse senkrecht zur Schlitzrichtung der ihm jeweils zugeordneten Schlitzblende ausgerichtet ist.

Um mit der erfindungsgemäßen Anordnung sechs unterschiedliche Komponenten, nämlich drei Verschiebungen in Richtung der X-, der Y- und der Z-Achse eines kartesischen Koordinatensystems und drei Winkeldrehungen um diese drei Achsen zu messen, sind die lichtemittierenden Einrichtungen mit den ihnen fest zugeordneten Schlitzblenden bezüglich der positionsempfindlichen Detektoren relativ gegeneinander bewegbar angeordnet. Vorzugsweise sind die positionsempfindlichen Detektoren auf der Innenseite eines zylindrischen Rings angeordnet, welcher seinerseits an der Innenseite der Kunststoffkugel fest angebracht ist.

Zwischen dem die positionsempfindlichen Detektoren tragenden Ring und einer in ihrer Mitte die lichtemittierenden Einrichtungen tragenden Halterungseinrichtung sind Federelemente, vorzugsweise in Form von Schraubenfedern, vorgesehen und beispielsweise mittels Schraubbolzen so gehaltert, daß der die positionsempfindlichen Detektoren tragende Ring bezüglich der stationären Halterungseinrichtung, mit den sechs lichtemittierenden Einrichtungen und den fest zugeordneten sechs Schlitzblenden so bewegbar ist, daß der Ring immer wieder in seine Ausgangslage zurückkehrt.

Im Unterschied zu den bischer verwendeten Meßsystemen läßt sich die opto-elektronische Anordnung gemäß der Erfindung sehr einfach, äußerst preiswert und sehr klein, d.h. kompakt ausführen und aufbauen, wodurch die wesentlichen, den bisherigen Systemen anhaftenden Nachteile beseitigt sind.

Obendrein ist gemäß der Erfindung jedem Detektor einzeln eine ganz bestimmte lichtemittierende Einrichtung zugeordnet, welche mittels einer einfachen Regelelektronik angesteuert wird, die die Summe der beiden Ströme, welche in dem jeder lichtmittierenden Einrichtung gesondert zugeordneten Detektor fließen, konstant auf einem Wert hält, der für alle sechs Systeme aus lichtemittierender Einrichtung, zugeordneter Schlitzblende und Detektor gleich ist.

Um dies zu erreichen, wird die Strahlungsintensität der lichtemittierenden Einrichtungen geregelt, d.h. bei den lichtemittierenden Einrichtungen, beispielsweise in Form von lichtemittierenden Dioden, wird der Durchflußstrom entsprechend geregelt. Alle elektronischen Bauteile, welche für die vorstehend beschriebene Regelung, d.h. für die Aufbereitung, die Filterung, eine Digitalisierung und eine anschließende Umrechnung der Meßwerte in die sechs kartesischen Ausgangssignale benötigt werden, können in einer Kunststoffkugel mit einem Durchmesser von etwa 70 mm untergebracht sein.

Die erfindungsgemäße Anordnung weist trotz einer ausgesprochen einfachen Mechanik bei einer Auflösung von weniger als 1 Prozent eine sehr gute Entkopplung zwischen den sechs zu messenden Komponenten auf.

Obendrein ist, wie vorstehend schon angeführt, die gesamte Elektronik in der Kugel integrierbar. Ferner werden bei der erfindungsgemäßen Anordnung keine Linsensysteme benötigt, und es sind auch keine Justier- oder Eicharbeiten erforderlich.

Nachfolgend wird die Erfindung anhand einer bevorzugten Ausführungsform unter Bezugnahme auf die anliegenden Zeichnungen erläutert. Es zeigen:

Fig. 1 schematisch in pespektivischer Darstellung die wesentlichen Teile einer in einer Kunststoffkugel untergebrachten, opto-elektronischen Anordnung gemäß der Erfindung und

Fig. 2 einen vergrößerten Ausschnitt aus der perspektivischen Darstellung der Fig. 1, aus welcher die Zuordnung der wesentlichen Teile der erfindungsgemäßen opto-elektronischen Anordnung zu ersehen sind.

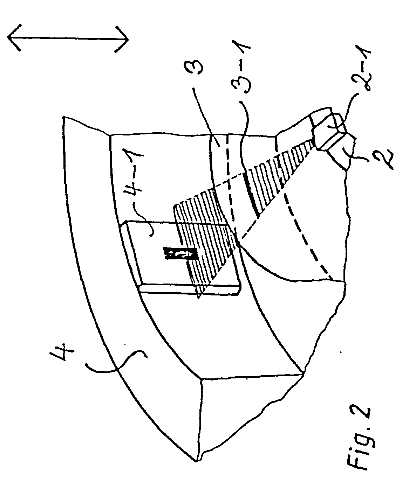

Wie dem Ausschnitt der Fig. 2 zu entnehmen ist, ist eine lichtemittierende Einrichtung, vorzugsweise in Form einer lichtemittierenden Diode 2-1 auf einer nur schematisch angedeuteten Halterungseinrichtung 2 angebracht. Der lichtemittierenden Diode 2-1 ist in einem fest vorgegebenen Abstand eine in einem zylindrischen Ring 3 ausgebildete Schlitzblende zugeordnet, welche in dem Ausschnitt der Fig. 2 die waagrecht verlaufende Schlitzblende 3-1 ist. Senkrecht zu der Schlitzrichtung der jeweiligen Schlitzblende ist ein positionsempfindlicher Detektor (PSD) 4-1 vorgesehen, welcher in dem in Fig. 2 wiedergegebenen Ausschnitt an einem zylindrischen Ring 4 angebracht ist.

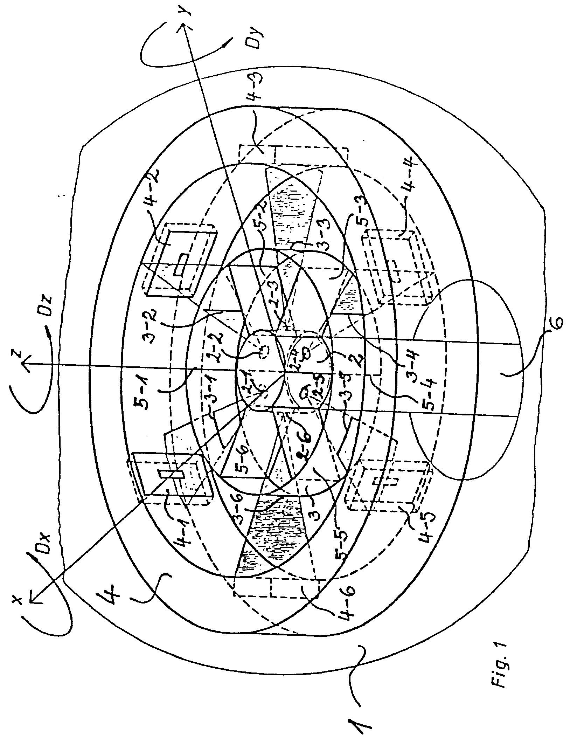

Die in Fig. 2 dargestellten und in der beschriebenen Weise einander zugeordneten Elemente, nämlich die lichtemittierende Diode 2-1, die Schlitzblende 3-1 und der senkrecht zu deren Schlitzrichtung angeordnete, positionsempfindliche Detektor 4-1 bilden gewissermaßen ein Basismeßsystem, welches, wie aus der perspektivischen Darstellung der Fig. 1 zu ersehen ist, mindestens sechsmal benötigt wird.

Bei der erfindungsgemäßen opto-elektronischen Anordnung sind die sechs lichtemittierenden Einrichtungen, vorzugsweise in Form von sechs lichtemittierenden Dioden 2-1 bis 2-6 in einer Ebene angeordnet, wobei den lichtemittierenden Einrichtungen in einem festen Abstand eweils eine Schlitzblende 3-1 bis 3-6 zugeordnet ist; hierbei sind benachbarte Schlitzblenden in dem Ring 3 jeweilsum 90° gegeneinander versetzt ausgebildet. So ist beispielsweise die Schlitzblende 3-1 waagrecht und die beiden benachbarten Schlitzblenden 3-2 bzw. 3-6 sind senkrecht dazu ausgerichtet; diese Beziehung gilt dann auch für alle übrigen Schlitzblenden und die ihnen jeweils benachbarten Schlitzblenden.

In der in Fig. 1 schematisch wiedergegebenen Ausführung sind die mindestens sechs positionsempfindlichen Detektoren 4-1 bis 4-6 an einem zylindrischen Ring 4 bezüglich der ihnen zugeordneten Schlitzblenden 3-1 bis 3-6 entsprechend ausgerichtet. Ferner ist der Ring 4 mit den sechs Detektoren 4-1 bis 4-6 fest auf der Innenseite einer Kunststoffkugel 1 angebracht. Da die sechs lichtemittierenden Dioden 2-1 bis 2-6 in Fig. 1 in einer schematisch als Zylinder angedeuteten Halterungseinrichtung 2 untergebracht sind, welche ihrerseits über einer Stütze 6 stationär angeordnet ist, ist über die Kunststoffkugel 1 der mit ihr fest verbundene Ring 4 mit den daran angebrachten sechs Detektoren gegenüber der stationären Anordnung aus den sechs lichtemittierenden Einrichtungen 2-1 bis 2-6 und dem ihr fest zugeordneten Schlitzblendenring 3 bewegbar.

Die stationäre, in Fig. 1 schematisch als Zylinder angedeutete Halterungseinrichtung 2 kann bei einer praktischen Ausführungsform beispielsweise als eine mit der stationären Stütze 6 fest verbundene Scheibe ausgeführt sein, deren Durchmesser etwa dem Außendurchmesser des die Detektoren 4-1 bis 4-6 tragenden Rings 4 entspricht und welche über oder unter diesem Ring 4 angeordnet sein kann.

Hierbei sind dann zwischen dem Ring 4 und der scheibenförmigen Halterungseinrichtung 2 Federelemente, vorzugsweise in Form von Schraubenfedern, vorgesehen, welche mittels Schraubbolzen sowohl dem Ring als auch der scheibenförmigen Halterungseinrichtung fest zugeordnet sind. Vorzugsweise durch solche Schraubenfedern ist dann erreicht, daß der die Detektoren 4-1 bis 4-6 tragende Ring 4 über die Kunststoffkugel 1 bezüglich der stationären Anordnung der lichtemittierenden Einrichtungen 2-1 bis 2-6 und dem fest zugeordneten Schlitzblendenring 3 bewegbar ist und nach jeder Verschiebung oder Winkeldrehung jeweils wieder in seine Ausgangslage zurückkehrt.

In der schematischen perspektivischen Darstellung der Fig. 1 sind zur Abschirmung der einzelnen lichtemittierenden Dioden 2-1 bis 2-6 zwischen ihnen jeweils in radialer Richtung verlaufende Abschirmstege 5-1 bis 5-6 dargestellt. Solche Stege können jedoch entfallen, wenn die einzelnen lichtemittierenden Dioden aufgrund ihrer Ausbildung oder aufgrund einer entsprechenden Anordnung oder Unterbringung auf bzw. in der Halterungseinrichtung 2 von sich aus entsprechend abgeschirmt sind, so daß sichergestellt ist, daß nur jeweils Licht der vorgesehenen radial gegenüberliegenden lichtemittierenden Einrichtung über die ihr fest zugeordnete Schlitzblende auf den jeweiligen positionsempfindlichen Detektor fällt.

Aufgrund der gewählten, bevorzugten Gesamtanordnung ist ein räumlich kompakteres Meßsystem geschaffen, als es bei einer Umkehr der optischen Zuordnung möglich wäre, welche jedoch prinzipiell genauso möglich ist.

Die mindestens sechs anhand von Fig. 2 beschriebenen Basismeßsysteme sind in gleichen Winkelabständen voneinander, d.h. unter einem Winkel von 60°, in einer Ebene angeordnet, und weisen, wie bereits beschrieben, abwechselnd zu dieser Ebene horizontal und vertikal ausgerichtete Schlitzblenden 3-1 bis 3-6 auf. Wie aus der Lage der einzelnen Schlitzblenden und der durch Schrauffur hervorgehobenen, von den lichtemittierenden Dioden 2-1 bis 2-6 ausgehenden Ebenen zu ersehen ist, sind die Detektorachsen der einzelnen positionsempfindlichen Detektoren 4-1 bis 4-6 immer senkrecht zu den ihnen zugeordneten Schlitzblenden 3-1 bis 3-6 ausgerichtet.

Dadurch erhält jedes einzelne Basismeßsystem eine selektive Meßempfindlichkeit für eine in der Detektorachsenrichtung erfolgende Bewegung, während sowohl Bewegungen senkrecht zur Detektorachse aufgrund der schlitzförmigen Blenden als auch Bewegungen senkrecht zu der

3

EP 0 240 023 B1

Detektoroberfläche vollständig entkoppelt möglich sind, wobei jedoch durch solche Bewegungen keine Meßsignale erzeugt werden.

Durch die in die sogenannte Meßebene versetzte, mindestens sechsfache Anordnung der in Fig. 2 schematisch dargestellten Basismeßsysteme ist eine vollständige Erfassung aller sechs möglichen Bewegungskomponenten, nämlich von drei Verschiebungen in Richtung der drei Achsen des Koordinatensystems und von drei Winkelbewegungen um diese drei Achsen, erreicht. Die mindestens sechs positionsempfindlichen Detektoren 4-1 bis 4-6 sind am dem zylindrischen Ring 4 so angebracht, daß der Nullpunkt ihrer Detektorflächen eine gemeinsame Ebene, die bereits erwähnte Meßebene, bildet. Da die Kunstoffkugel 1 fest an dem die Detektoren 4-1 bis 4-6 tragenden Ring 4 angebracht ist, und da dieser Ring 4 wiederum, wie oben im einzelnen ausgeführt, vorzugsweise mittels Federelementen mit der stationären Halterungseinrichtung verbunden ist, welche die Anordnung aus den sechs lichtemittierenden Einrichtungen 2-1 bis 2-6 und die diesen fest zugeordneten Schlitzblenden 3-1 bis 3-6 trägt, halten diese Federelemente das gesamte Meßsystem in der mechanischen Nullstellung, wenn keine Kommandos auf die Kugel 1 aufgebracht werden.

Hierbei läßt sich durch Variation der Federeigenscaften (deren Steifigkeit) die Betriebscharakteristik der Kugel in weiten Grenzen beeinflussen. Bei Verwendung von verhältnismäßig weichen Federelementen wirkt die Kuge 1 eher als ein wegempfindlicher Sensor, während bei Verwendung von härteren Fedeelementen Kommandos mehr durch Ausüben von Kräften und Momenten erteilt werden.

Aufgrund der Verwendung von nicht nur einer Lichtquelle für alle Detektorsysteme, sondern von jeweils einer eigenen, jedem sogenannten Basismeßsystem zugeordneten Lichtquelle kann die erforderliche Signalaufbereitungselektronik sehr einfach realisiert werden. Die interessierende Lage des auf den jeweiligen positionsempfindlichen Detektor treffenden Lichtschlitzes läßt sich aus dessen beide Ausgangsströmen ($I1, I2$), welche zuvor in proportionale Spannungen ($U1, U2$) umgewandelt werden, über die bekannte Beziehung $(U1-U2)/(U1+U2)$ ermitteln. Dieser Quotient ist jedoch analog technisch nur mit einem verhältnismäßig großen Aufwand zu bestimmen. Die Erfassung sowie die Digitalisierung der Spannungen $U1$ und $U2$ und die anschließende digitale Bestimmung des Ausdrucks bedingen im Ergebnis zusätzliche Quantisierungsfehler, insbesondere dann, wenn preiswerte Wandler mit einem niedrigen Auflösungsvermögen verwendet werden sollen.

Wie schon erwähnt, ist diese Schwierigkeit bei der erfindungsgemäßen opto-elektronischen Anordnung dadurch beseitigt, daß jedem positionsempfindlichen Detektor eine eigene Lichtquelle zugeordnet ist, welche durch eine einfache Regelelektronik angesteuert wird. Mit dieser Regelelektronik wird die Summe ($I1+I2$) der beiden Detektorströme $I1$ und $I2$ gemessen, und die Strahlungsintensität der zugeordneten Lichtquelle wird so geregelt, daß unabhängig von dem Abstand und der Lage der zugeordneten Schlitzblende (3-1 bis 3-6) diese Summe immer einem fest eingestellten Wert entspricht, wobei dieser Wert für alle mindestens sechs Basismeßsysteme gleich ist.

Mit Hilfe dieser Regelelektronik werden dann beispielsweise unterschiedliche Detektor-Empfindlichkeiten, unterschiedliche Leuchtdioden-Wirkungsgrade, Toleranzen in den elektronischen Bauelementen sowie Temperaturdriften automatisch und schnell ausgeregelt. Auf diese Weise ist kein zusätzlicher Abgleich erforderlich, und er kann somit entfallen. Das gewünschte Lagesignal läßt sich dann in einfacher Weise hochgenau lediglich durch eine Differenzbildung ($U1-U2$) der beiden zu den Ausgangsströmen $I1$ und $I2$ der Detektoren proportionalen Spannungen $U1$ und $U2$ bestimmen.

Die so gewonnenen mindestens sechs Lagespannungen UL1 bis UL6 der einzelnen positionsempfindlichen Detektoren 4-1 bis 4-6 werden digitalisiert und einem Mikrocomputer zugeführt, welcher dann beispielsweise über das nachstehend wiedergegebene, einfache Gleichungssystem die insgesamt sechs Verschiebungen und Winkeldrehungen errechnet:

| | | | | | | | |
|----|------|-------|------|------|-------|-------|-----|
| X  | 0    | 1.75  | 0    | 0    | 0     | −1.75 | UL1 |
| Y  | 0    | −1    | 0    | 2    | 0     | −1    | UL2 |
| Z  | 1    | 0     | 1    | 0    | 1     | 0     | UL3 |
| Dx | 0    | 0     | 1.75 | 0    | −1.75 | 0     | UL4 |
| Dy | 2    | 0     | −1   | 0    | −1    | 0     | UL5 |
| Dz | 0    | 1     | 0    | 1    | 0     | 1     | UL6 |

Durch Betriebsversuche mit einem Prototyp der erfindungsgemäßen opto-elektronischen Anordnung konnte die einwandfreie Funktion der in eine Kunststoffkugel 1 eingebauten Meßanordnung nachgewiesen werden. Beispielsweise ließ sich ein Roboter mit sechs Freiheitsgraden, in der Bewegung sauber entkoppelt, auf geraden Bahnen im Raum führen. Ebenso konnte die Orientierung der Hand kommandiert werden, ohne daß translatorische Bewegungen auftraten.

Die erfindungsgemäße opto-elektronische Anordnung ist auch für hochgenaue Positionieraufgaben vorzüglich geeignet, wie sie beispielsweise bei Robotern und Werkzeugmaschinen vorkommen. In einem

4

solchen Fall sind dann die Anordnung aus den lichtemittierenden Einrichtungen und der ihr fest zugeordnete Blendenteil sowie der Ring mit den positionsempfindlichen Detektoren nicht mit Federn verbunden, sondern getrennt an den beiden auszurichtenden Maschinenteilen angebracht. Mit Hilfe der erfindungsgemäßen opto-elektronischen Anordnung und der nachgeschalteten Regelelektronik können dann die Teile in allen sechs Freiheitsgraden ausgerichtet werden, bzw. die verbleibenden Ausrichtfehler hochgenau festgestellt werden.

Ohne Abwandlung des Grundgedankens der erfindungsgemäßen opto-elektronischen Anordnung können auch großflächige Detektoren verwendet werden, um dadurch größere Wege- und Winkelmeßbereiche zu erhalten. In diesem Fall kann dann auch der Einsatz von Linsensystemen zur Lichtstrahlbündelung oder zu dessen Abbildung auf einer Detektorfläche sinnvoll sein.

**Patentansprüche**

1. In einer Kunststoffkugel untergebrachte, opto-elektronische Anordnung zum gleichzeitigen Eingeben von sechs Komponenten, nämlich drei Verschiebungen und drei Winkeldrehungen in bzw. um die drei Achsen eines kartesischen Koordinatensystems, dadurch gekennzeichnet, daß jede von mindestens sechs in gleichen Winkelabständen voneinander in einer Ebene angebrachten, lichtemittierenden Einrichtungen (2-1 bis 2-6) mit jeweils vorgeschalteter, fest angeordneter Schlitzblende (3-1 bis 3-6) gegenüber je einem mit seiner Detektorachse senkrecht zur Schlitzrichtung der jeweils zugeordneten Schlitzblende (3-1 bis 3-6) ausgerichteten, positionsempfindlichen Detektor (4-1 bis 4-6) so vorgesehen ist, daß die lichtemittierenden Einrichtungen (2-1 bis 2-6) mit zugeordneten Schlitzblenden (3-1 bis 3-6) und die positionsempfindlichen Detektoren (4-1 bis 4-6) relativ gegeneinander bewegbar sind, und daß die jedem positionsempfindlichen Detektor (4-1 bis 4-6) einzeln zugeordnete lichtemittierende Einrichtung (2-1 bis 2-6) jeweils mittels einer Regelelektronik angesteuert wird, welche die Summe der beiden, in dem zugehörigen positionsempfindlichen Detektor (4-1 bis 4-6) fließenden Ströme konstant auf einem für alle sechs Systeme gleichen Wert hält und dazu die Strahlungsintensität der lichtemittierenden Einrichtungen (2-1 bis 2-6) regelt.

2. Opto-elektronisches System nach Anspruch 1, dadurch gekennzeichnet, daß die positionsempfindlichen Detektoren (4-1 bis 4-6) auf der Innenseite eines zylindrischen Rings (4) entsprechend ausgerichtet angeordnet sind, der an der Innenseite der Kunststoffkugel (1) fest angebracht ist und der über zwischen dem Ring (4) und einer in der Mitte die lichtemittierenden Einrichtungen tragenden Halterungseinrichtung vorgesehene Federelemente bezüglich der stationären Anordnung aus den mindestens sechs lichtemittierenden Einrichtungen (2-1 bis 2-6) und den diesen jeweils fest zugeordneten sechs Schlitzblenden (3-1 bis 3-6) so bewegbar ist, daß er (4) immer wieder in seine Ausgangslage zurückkehrt.

3. Opto-elektronisches System nach einem der Ansprüche 1 oder 2, dadurch gekennzeichnet, daß die mindestens sechs lichtemittierenden Einrichtungen (2-1 bis 2-6) vorzugsweise in einer Halterungseinrichtung (2) untergebracht sind, mit welcher vorzugsweise über radial verlaufende Stege (5-1 bis 5-6) ein zylindrischer Ring (3) fest verbunden ist, in welchem in den gleichen Winkelabständen wie die an der Halterungseinrichtung (2) angebrachten, lichtemittierenden Einrichtungen (2-1 bis 2-6) und diesen in radialer Richtung gegenüberliegend abwechselnd die jeweils um 90° gegeneinander versetzten Schlitzblenden (3-1 bis 3-6) ausgebildet sind.

**Revendications**

1. Dispositif opto-électronique placé dans une sphère de matière synthétique en vue de l'entrée simultanée de six composantes, c'est-à-dire trois translations et trois rotations angulaires, respectivement dans ou autour des trois axes d'un système de coordonnées cartésiennes, caractérisé par le fait que chacun d'au moins six dispositifs photo-émetteurs (2-1 à 2-6) situés dans un plan, à des intervalles angulaires égaux les uns des autres et comportant, à chaque fois, un diaphragme à fente (3-1 à 3-6) installé en amont et de manière fixe, est prévu, par rapport à un détecteur respectif (4-1 à 4-6) sensible aux positions et orienté, par son axe, perpendiculairement à la direction de la fente du diaphragme à fente (3-1 à 3-6) respectivement associé, de telle sorte que des mouvements relatifs puissent être imprimés aux dispositifs photo-émetteurs (2-1 à 2-6) avec des diaphragmes à fentes associés (3-1 à 3-6), et aux détecteurs (4-1 à 4-6) sensibles aux positions; et par le fait que le dispositif photo-émetteur (2-1 à 2-6) associé individuellement à chaque détecteur (4-1 à 4-6) sensible aux positions est commandé, à chaque fois, au moyen d'une électronique de réglage qui maintient constamment, à une valeur identique pour l'ensemble des six systèmes, la somme des deux courants circulant dans le détecteur associé (4-1 à 4-6) sensible aux positions, et règle, à cette fin, l'intensité de rayonnement des dispositifs photo-émetteurs (2-1 à 2-6).

2. Système opto-électronique selon la revendication 1, caractérisé par le fait que les détecteurs (4-1 à 4-6) sensibles aux positions sont disposés, avec orientation correspondante, à la face interne d'un anneau cylindrique (4) qui est installé rigidement à la face interne de la sphère de matière synthétique (1) et peut être déplacé, par l'intermédiaire d'éléments élastiques prévus entre l'anneau (4) et un dispositif de retenue portant centralement les dispositifs photoémetteurs, par rapport à l'ensemble fixe comprenant les dispositifs photo-émetteurs (2-1 à 2-6) au nombre minimal de six, et les six diaphragmes à fentes (3-1 à 3-6) respectivement associés de manière fixe auxdits dispositifs, de telle sorte qu'il (4) retourne en permanence à sa position de départ.

3. Système opto-électronique selon l'une des revendications 1 ou 2, caractérisé par le fait que les dispositifs photo-émetteurs (2-1 à 2-6) au nombre minimal de six sont logés, de préférence, dans un dispositif de retenue (2) auquel est relié rigidement, de préférence par l'intermédiaire de nervures (5-1 à 5-6) s'étendant radialement, un anneau cylindrique (3) dans lequel les diaphragmes à fentes (3-1 à 3-6), respectivement décalés les uns des autres de 90°, sont réalisés selon les mêmes intervalles angulaires que les dispositifs photo-émetteurs (2-1 à 2-6) qui sont installés sur le dispositif de retenue (2), avec alternance en vis-à-vis desdits dispositifs dans le sens radial.

**Claims**

1. An optoelectronic system housed in a plastic sphere and permitting simultaneous input of six components consisting of three displacements and three angular rotations in and around the three axes of a Cartesian system of coordinates, characterized in that each of at least six light-emitting devices (2-1 to 2-6) arranged on one plane at equal angular distances from each other and connected in series with a fixed slit diaphragm (3-1 to 3-6) is disposed opposite a position-sensitive detector (4-1 to 4-6) whose axis is aligned at right angle to the slit direction of the slit diaphragm (3-1 to 3-6) associated therewith, so that the light-emitting devices (2-1 to 2-6) with their associated slit diaphragms (3-1 to 3-6) and the position-sensitive detectors (4-1 to 4-6) are movable relative to each other, and that any individual light-emitting device (2-1 to 2-6) associated with a position-sensitive detector (4-1 to 4-6) is controlled by electronic control means which maintain the sum of both currents flowing through the respective position-sensitive detector (4-1 to 4-6) at a constant value identical for all of the six sub-systems by controlling the radiant intensity of the light-emitting devices (2-1 to 2-6).

2. The optoelectronic system according to Claim 1 wherein the position-sensitive detectors (4-1 to 4-6) are arranged in proper alignment on the inner side of a cylindrical ring (4) which is firmly attached to the inner side of the plastic sphere (1) and wherein, by means of spring elements disposed between ring (4) and a mounting unit carrying in its center portion the light-emitting elements, said ring (4) is movable relative to the stationary assembly of at least six light-emitting devices (2-1 to 2-6) and six associated slit diaphragms (3-1 to 3-6) in such a manner that the ring (4) always returns into its original position.

3. The optoeletronic system according to Claim 1 or 2 wherein said at least six light-emitting devices (2-1 to 2-6) are preferably accomodated in a mounting unit (2), to which a cylindrical ring (3) is connected, preferably by means of radially extending shields (5-1 to 5-6), said ring (3) being provided with slit diaphragms (3-1 to 3-6) which are arranged at the same angular distances as the light-emitting devices (2-1 to 2-6) attached to the mounting unit (2) and in radially opposite positions thereto while being alternately turned by 90° in relation to each other.

Fig. 1

1

Fig. 2